# EUROPEAN PATENT APPLICATION

(11) **EP 4 175 373 A2**
(43) Date of publication of application: **03.05.2023**
(21) Application number: 22201745.1
(22) Date of filing: 14.10.2022
(51) Int. Cl.: H04W 60/00, H04W 8/18, H04W 4/08

(54) **USER EQUIPMENT ASSOCIATION**

(30) Priority: 28.10.2021 US 202163273097 P
(71) Applicant: Apple Inc., Cupertino CA 95014 (US)
(72) Inventor: SIROTKIN, Alexander, Cupertino, 95014 (US); XU, Fangli, Beijing, 100022 (CN); HU, Haijing, Cupertino, 95014 (US); PALLE VENKATA, Naveen Kumar R., Cupertino, 95014 (US); NUGGEHALLI, Pavan, Cupertino, 95014 (US); ROSSBACH, Ralf, 85579 Munich (DE); VANGALA, Sarma V., Cupertino, 95014 (US); GURUMOORTHY, Sethuraman, Cupertino, 95014 (US); CHEN, Yuqin, Cupertino, 95014 (US); WU, Zhibin, Cupertino, 95014 (US)
(74) Representative: Barton, Russell Glen

(57) **Abstract**

The present application relates to devices and components including apparatus, systems, and methods for control-plane signaling for UE associations in wireless networks.

## Description

### BACKGROUND

Third Generation Partnership Project (3GPP) Technical Specifications (TSs) define standards for New Radio (NR) wireless networks. These TSs describe aspects related to user plane and control plane signaling over the networks.

### BRIEF DESCRIPTION OF THE DRAWINGS

FIG. 1 illustrates a network environment in accordance with some embodiments.
FIG. 2 illustrates a call flow in accordance with some embodiments.
FIG. 3 illustrates another call flow in accordance with some embodiments.
FIG. 4 illustrates another call flow in accordance with some embodiments.
FIG. 5 illustrates another call flow in accordance with some embodiments.
FIG. 6 illustrates an operation flow/algorithmic structure in accordance with some embodiments.
FIG. 7 illustrates another operation flow/algorithmic structure in accordance with some embodiments.
FIG. 8 illustrates another operation flow/algorithmic structure in accordance with some embodiments.
FIG. 9 illustrates a user equipment in accordance with some embodiments.
FIG. 10 illustrates a network device in accordance with some embodiments.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, and techniques in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrases "A/B" and "A or B" mean (A), (B), or (A and B); and the phrase "(A)B" means "B" or "A and B," that is, A is optional.

The following is a glossary of terms that may be used in this disclosure.

The term "circuitry" as used herein refers to, is part of, or includes hardware components that are configured to provide the described functionality. The hardware components may include an electronic circuit, a logic circuit, a processor (shared, dedicated, or group) or memory (shared, dedicated, or group), an application specific integrated circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable system-on-a-chip (SoC)), or a digital signal processor (DSP). In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, or transferring digital data. The term "processor circuitry" may refer an application processor, baseband processor, a central processing unit (CPU), a graphics processing unit, a single-core processor, a dual-core processor, a triple-core processor, a quad-core processor, or any other device capable of executing or otherwise operating computer-executable instructions, such as program code, software modules, or functional processes.

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, and network interface cards.

The term "user equipment" or "UE" as used herein refers to a device with radio communication capabilities that may allow a user to access network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, or reconfigurable mobile device. Furthermore, the term "user equipment" or "UE" may include any type of wireless/wired device or any computing device including a wireless communications interface.

The term "computer system" as used herein refers to any type interconnected electronic devices, computer devices, or components thereof. Additionally, the term "computer system" or "system" may refer to various components of a computer that are communicatively coupled with one another. Furthermore, the term "computer system" or "system" may refer to multiple computer devices or multiple computing systems that are communicatively coupled with one another and configured to share computing or networking resources.

The term "resource" as used herein refers to a physical or virtual device, a physical or virtual component within a computing environment, or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, or workload units. A "hardware resource" may refer to compute, storage, or network resources provided by physical hardware elements. A "virtualized resource" may refer to compute, storage, or network resources provided by virtualization infrastructure to an application, device, or system. The term "network resource" or "communication resource" may refer to resources that are accessible by computer devices/systems via a communications network. The term "system resources" may refer to any kind of shared entities to provide services, and may include computing or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with or equivalent to "communications channel," "data communications channel," "transmission channel," "data transmission channel," "access channel," "data access channel," "link," "data link," "carrier," "radio-frequency carrier," or any other like term denoting a pathway or medium through which data is communicated. Additionally, the term "link" as used herein refers to a connection between two devices for the purpose of transmitting and receiving information.

The terms "instantiate," "instantiation," and the like as used herein refers to the creation of an instance. An "instance" also refers to a concrete occurrence of an object, which may occur, for example, during execution of program code.

The term "connected" may mean that two or more elements, at a common communication protocol layer, have an established signaling relationship with one another over a communication channel, link, interface, or reference point.

The term "network element" as used herein refers to physical or virtualized equipment or infrastructure used to provide wired or wireless communication network services. The term "network element" may be considered synonymous to or referred to as a networked computer, networking hardware, network equipment, network node, or a virtualized network function.

The term "information element" refers to a structural element containing one or more fields. The term "field" refers to individual contents of an information element, or a data element that contains content. An information element may include one or more additional information elements.

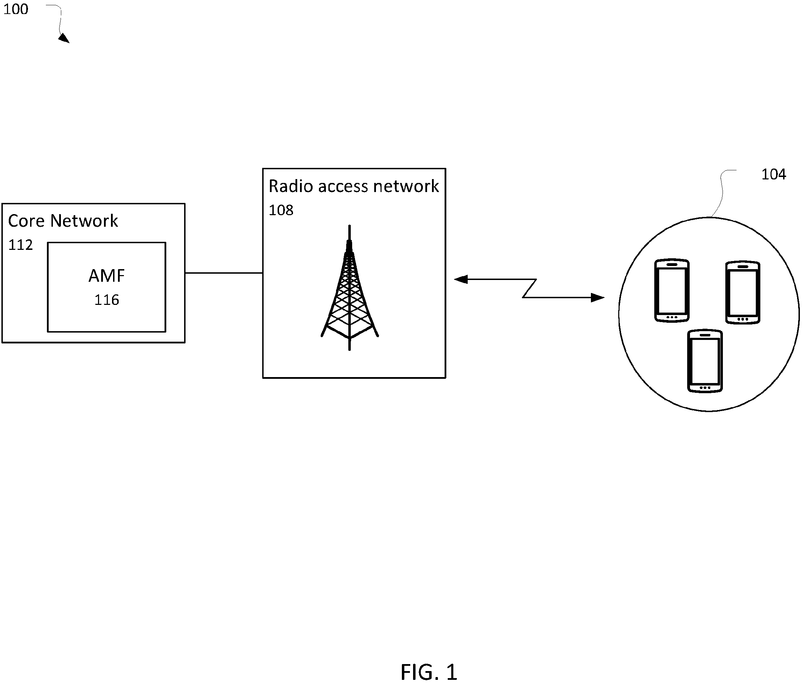

FIG. 1 illustrates a network environment 100 in accordance with some embodiments. The network environment 100 may include a group of user equipments (UEs) 104 communicatively coupled with a radio access network (RAN) 108 that includes one or more base stations. The UEs 104 and the base station(s) of the RAN 108 may communicate over air interfaces compatible with 3GPP TSs such as those that define Fifth Generation (5G) NR system standards. The base station(s) of the RAN 108 may be next generation node B (gNBs) to provide one or more 5G New Radio (NR) cells to provide NR user plane and control plane protocol terminations toward the UEs 104.

The network environment 100 may further include a core network (CN) 112. For example, the CN 112 may comprise a 5^{th} Generation Core network (5GC). The CN 112 may be coupled to the base station(s) of the RAN 108 via a fiber optic or wireless backhaul. The CN 112 may provide functions for the UEs 104 via the RAN 108. These functions may include managing subscriber profile information, subscriber location, authentication of services, or switching functions for voice and data sessions.

The CN 112 may include an access and mobility management function (AMF) 116. The AMF 116 may be a control plane function that provides registration management, connection management, reachability management, and mobility management services. Registration management may allow a UE to register and deregister with the CN 112. Upon registration, a UE context may be created within the CN 112. The UE context may be a set of parameters that identify and characterize the UE. The UE context may include identity information, subscription information, capability information, access and mobility information, or protocol data unit (PDU) session information.

In some embodiments, the group of UEs 104 may be associated with one another to coordinate transmissions with the RAN 108. For example, the group of UEs 104, as a collective, may be capable of obtaining and using more network and platform resources than the capabilities of any individual UE. The network resources may include bandwidth, uplink transmit power, etc., while the platform resources may include processing resources, transmit/receive resources, antennas, etc. This may be beneficial in a number of end-user scenarios including, for example, uploading live video content to an application server.

In related art, grouped UE communications has been described as UE aggregation as provided in over-the-top products. These systems describe a sublayer above the packet data convergence protocol (PDCP) sublayer to allow aggregated UEs to receive communication in the coordinated mode without data disorder or duplication during the data splitting between the aggregated UEs. UE aggregation designed for specific use cases is associated with unnecessary complexity.

Grouped UE communication may be divided into user plane aspects and control plane aspects. While existing over-the-top UE aggregation may be sufficient to address user plane aspects, it may be inefficient in addressing control plane aspects. Thus, embodiments of the present disclosure address control plane aspects of group UE communication with modest standardization/implementation impacts.

In particular, some embodiments describe control-plane aspects that may be used to efficiently form and manage the group of UEs 104. The UE association described in various embodiments may be a control-plane only association, with the user plane being handled by an over-the-top UE aggregation solution. The control-plane aspects of this disclosure may be a part of a standardized UE aggregation solution.

The RAN 108 may have knowledge of the UEs associated with one another in the group 104. The associated UEs will move together and, therefore, experience similar radio propagation conditions. Further, in many instances, the associated UEs may use the same applications. The RAN 108 may use this association information to efficiently manage the group of UEs 104 by coordinating handover operations, measurements, and radio resource management decisions.

The embodiments of the present disclosure may be associated with a number of advantages with respect to a UE aggregation solution for both control/data plane. These advantages may include a significant reduction in complexity while maintaining control plane advantages, providing similar performance, and avoiding system architecture security issues.

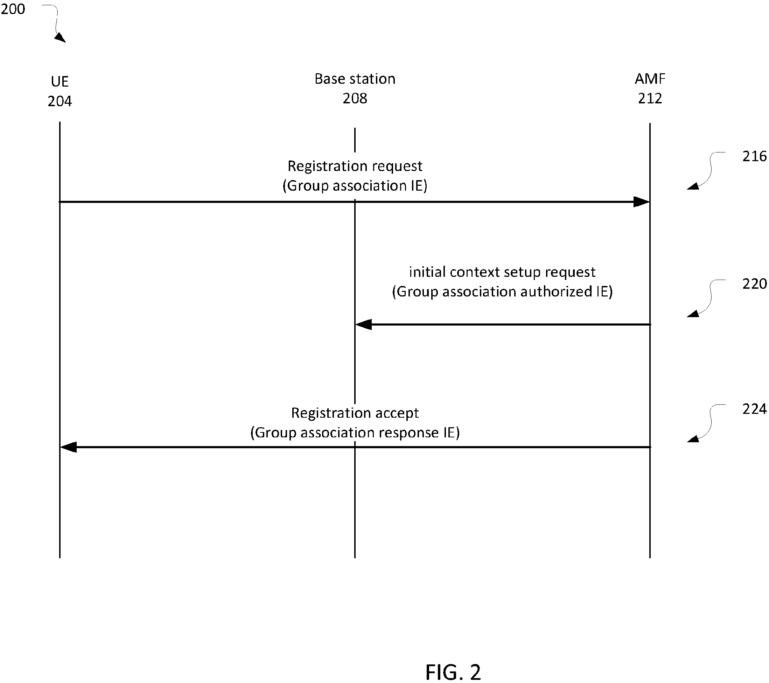

FIG. 2 illustrates a call flow 200 in accordance with some embodiments. The call flow 200 may be between a UE 204, a base station 208, and an AMF 212, which may be substantially interchangeable with like-named components of FIG. 1.

At 216, the UE 204 may send a registration request to the AMF 212. The registration request may be a non-access stratum (NAS) registration request that serves as a request to join a group of UEs. The AMF 212 may check subscription information corresponding to the UE 204 in order to determine whether the UE 204 is authorized to join the group of UEs. The subscription information may be stored in a subscription repository in the core network.

The UE 204 may identify the UEs with which it desires to be associated in a group in accordance with various options. A first option may be based solely on subscription information. For example, the subscription information may indicate that the UE 204 belongs to a group of UEs. With the first option, the UE 204 may only need to include an identifier of the UE (UE ID) (or other information that allows the AMF 212 to identify the UE 204) and an indication that the UE 204 wishes to join a group (without the group itself being explicitly identified) in the registration request transmitted at 2016. Upon receiving the registration request and identifying the UE 204, the AMF 212 may determine the group of UEs for which an association is requested based on the UE subscription information. While this option may be effective in some situations, it may also limit flexibility by requiring the UE to only be part of a single group.

In a second option, the UE 204 may include a UE ID (or other information that allows the AMF 212 to identify the UE 204) and a group ID. The group ID may be pre-provisioned in the UE 204 (for example, in a universal subscriber identity module) and may also be stored in the UE subscription information in the core network. When the UE 204 wishes to join a specific group, it may indicate the group that it wants to join by transmitting the corresponding group ID to the AMF 212. The AMF 212 may check the UE subscription information to determine whether the UE 204 is authorized to join that group.

In some embodiments, the registration request may include a group association IE. For the first option discussed above, the group association IE may simply include a one-bit join indication that indicates that the UE 204 wishes to join a group. For the second option discussed above, the group association IE may include a multi-bit group UE ID to identify the group the UE requests to join. The group UE ID may have a length appropriate for uniquely identifying the group within the network. For example, the length may be, but is not limited to, 8-bits, 16 bits, or 32 bits.

If the AMF 212 determines that the UE 204 is authorized to join a group as requested by the registration request, the AMF 212 may send an initial context setup request to the base station 208 at 220. The initial context setup request may include an indication that the UE 204 has been authorized to join the group. The initial context setup request may also include a list of the UEs that belong to the group or a group ID that is being joined by the UE 204. This may provide the base station 208 with information as to which UEs are associated with one another. The base station 208 may use this information to coordinate network management of the UEs.

The context setup request may be an NG-application protocol (AP) message that includes a group association authorized IE that provides indications in accordance with either of two options. In a first option, the group association authorized IE may include a group UE ID (for example, 8, 16, or 32 bits) that allows the base station 208 to identify the UEs belonging to the same group. In a second option, the group association authorized IE may include a list of UE identifiers that allows the base station 208 to identify the UEs belonging to the same group. The UE identifiers may be, for example, RAN UE NG-AP identifiers such as international mobile subscriber identities (IMSIs).

If the AMF 212 determines that the UE 204 is authorized to join a group as requested by the registration request, it may also send a registration accept message to the UE 204 at 224. The registration accept message may include a group association response IE that includes a one-bit join response indication that indicates the UE group association request was successful.

If the AMF 212 determines that the UE 204 is not authorized to join a group as requested by the registration request, the AMF 212 may send a registration reject message (not shown) to the UE 204. The registration reject message may include the group association response IE with a one-bit join response indication to indicate that the request to join the group was unsuccessful.

While the call flow 200 describes using registration request/accept and context setup messages to manage group association, other embodiments may account for a UE joining or unjoining a group at a time other than an initial registration.

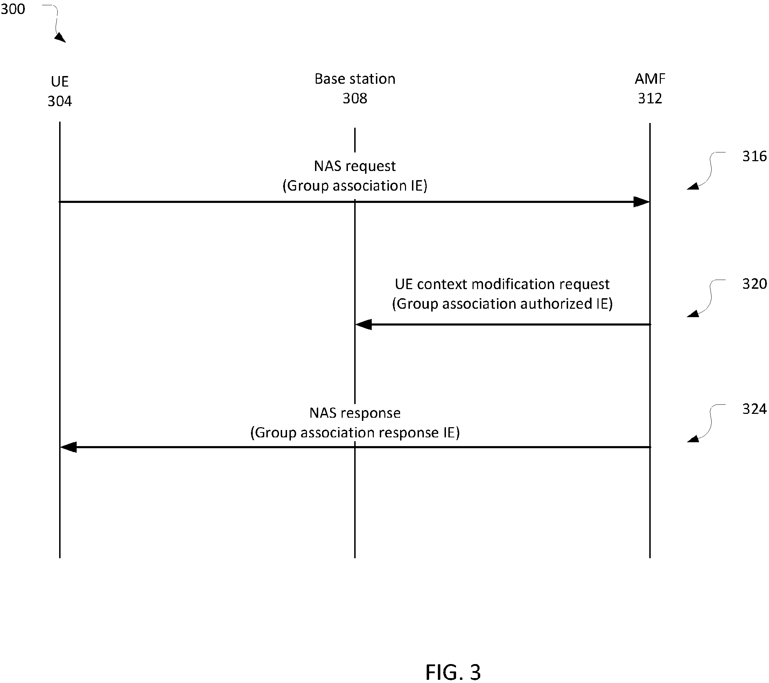

FIG. 3 illustrates a call flow 300 in which a UE may join/unjoin a group at a time other than registration in accordance with some embodiments. The call flow 300 may be between a UE 304, a base station 308, and an AMF 312, which may be substantially interchangeable with like-named components of FIG. 1.

At 316, the UE 304 may send a NAS request to the AMF 312. The NAS request, which may be transmitted after the UE 304 is already registered with the AMF 312, may serve as a request to join/unjoin a group of UEs. For a request to join a group, the AMF 312 may check subscription information corresponding to the UE 304 in order to determine whether the UE 304 is authorized to join the group of UEs. The subscription information may be stored in a subscription repository in the core network.

The NAS request may be an UL NAS transport message or a new NAS message specifically designed to carry requests related to joining/unjoining a group. The new NAS message may be referred to as a NAS association request message.

Similar to that described above with respect to FIG. 2, the NAS request may include a group association IE with a one-bit join indication or a multi-bit group UE ID to identify the group the UE requests to join.

In some embodiments, the one bit indication in the group association IE may be a join/unjoin indication to indicate that the UE wants to join or unjoin a group. A UE may wish to unjoin a group if it no longer wishes to be managed jointly with the group, ceases group communication, or for some other reason.

In some embodiments, the group association IE may include both a one-bit join/unjoin indication and a multi-bit group UE ID. In this manner, the UE 204 may manage associations among more than one group. For example, if the UE 204 is joined with both group 1 and group 2, it may send a group association IE with a group UE ID corresponding to group 2 and a j oin/unj oin indication set to unj oin. This group association IE may cause the network to unjoin the UE 204 from group 2 while leaving the UE 204 joined to group 1.

If the AMF 312 determines that the UE 304 is authorized to join/unjoin a group as requested in the NAS request, the AMF 312 may send a UE context modification request to the base station 308 at 320. Similar to that discussed above with respect to FIG. 2, the UE context modification request may include a group association authorized IE that provides indications that the UE is authorized to join/unjoin a group in accordance with either of two options. In a first option, the group association authorized IE may include a group UE ID (for example, 8, 16, or 32 bits) that allows the base station 308 to identify the UEs belonging to the same group. In a second option, the group association authorized IE may include a list of UE identifiers that allows the base station 308 to identify the UEs belonging to the same group.

If the AMF 312 determines that the UE 304 is authorized to join/unjoin a group as requested by the NAS request, it may also send NAS response message to the UE 304 at 324. The NAS response message may be a downlink NAS transport message or a new NAS message specifically designed to carry responses related to requests for joining/unjoining a group. The NAS response message may include a group association response IE that includes a one-bit join response indication that indicates whether the join/unjoin request in the NAS request was successful.

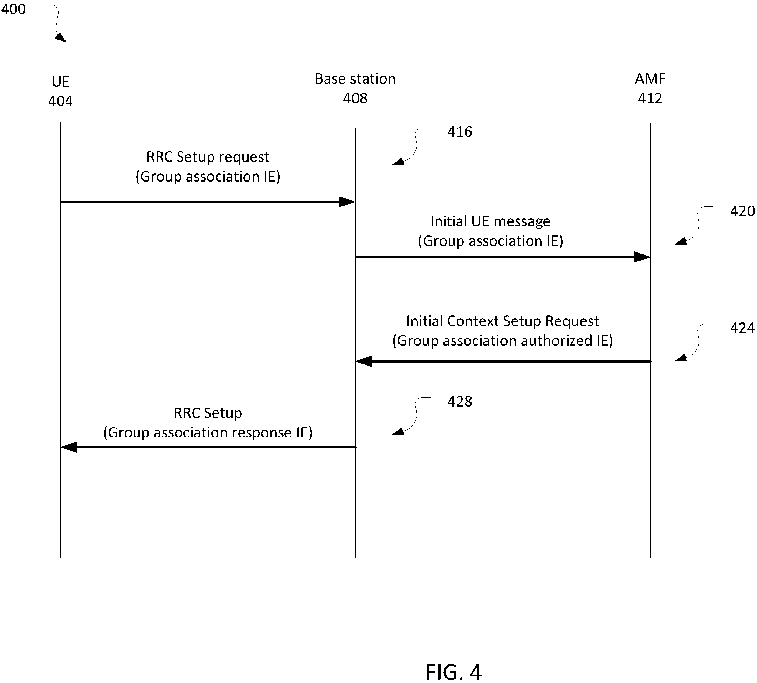

FIG. 4 illustrates a call flow 400 in accordance with some embodiments. The call flow 400 may be between a UE 404, a base station 408, and an AMF 412, which may be substantially interchangeable with like-named components of FIG. 1.

At 416 the UE 404 may send an RRC setup request to the base station 408 to request establishment of an RRC connection. The RRC setup request may include a request to join a group. The RRC setup request may include a UE/group ID similar to that discussed above with respect to the registration request 216 of FIG. 2. For example, the RRC setup request may include a group association IE with a one-bit indication to indicate that the UE 404 wishes to join a group. The group association IE may additionally/alternatively include a multi-bit group UE ID to identify the group the UE requests to join.

The base station 408 may generate and transmit an initial UE message (or some other NG-AP signal) based on the RRC setup request to the AMF 412. The base station 408 may transmit the initial UE message to the AMF 412 to check whether the UE 404 is authorized to join the group. The initial UE message may include the group association IE included in the RRC setup request.

The AMF 412 may determine whether the UE 404 is authorized to join the group as discussed above with respect to FIG. 2.

If the AMF 412 determines that the UE 404 is not authorized to join the group, the AMF 412 may send a reject message (not shown) with an indication that the request to join the group was denied.

If the AMF 412 determines that the UE 404 is authorized to join the group, the AMF 412 may send an initial context setup request message 424. Similar to that discussed above with respect to FIG. 2, the context setup request message 424 may include a group association authorized IE that provides indications that the UE 404 is authorized to join a group in accordance with either of two options. In a first option, the group association authorized IE may include a group UE ID (for example, 8, 16, or 32 bits) that allows the base station 408 to identify the UEs belonging to the same group. In a second option, the group association authorized IE may include a list of UE identifiers that allows the base station 408 to identify the UEs belonging to the same group.

At 428, the base station 408 may transmit an RRC setup message to the UE 304 to establish a signaling radio bearer 1 (SRB1) and to indicate that the UE 304 is authorized to join the group. The RRC setup message may include a group association response IE that includes a one-bit join response indication that indicates whether the join request in the RRC setup request was successful.

While the call flow 400 describes using an RRC setup process to manage group association, other embodiments may account for a UE joining/unjoining a group after an RRC connection is established.

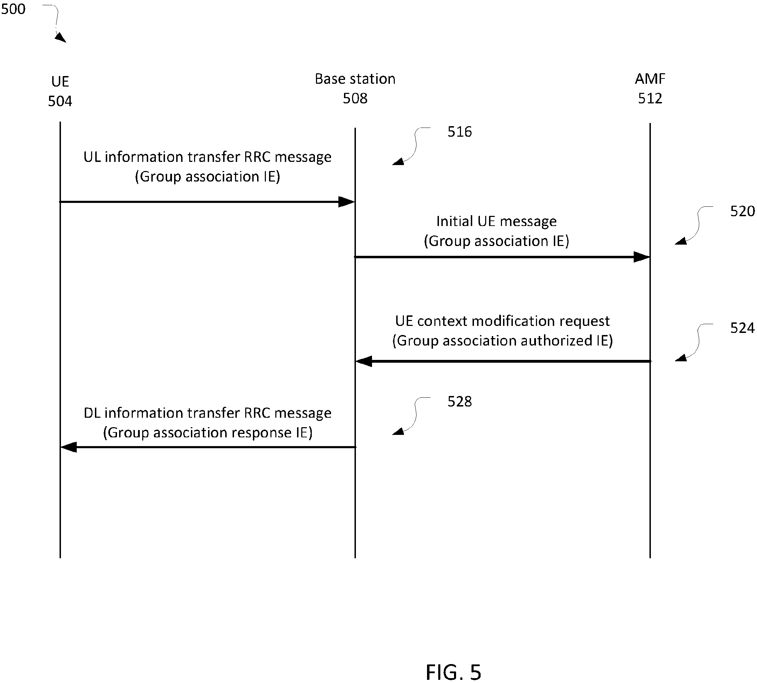

FIG. 5 illustrates a call flow 500 in accordance with some embodiments. The call flow 500 may be between a UE 504, a base station 508, and an AMF 512, which may be substantially interchangeable with like-named components of FIG. 1.

At 516 the UE 504 may send an UL information transfer RRC message to the base station 508 to request to join/unjoin a group. The UL information transfer RRC message may include a UE/group ID similar to that discussed above with respect to the NAS request 316 of FIG. 3. For example, the UL information transfer RRC message may include a group association IE with a one-bit indication to indicate that the UE 504 wishes to join/unjoin a group. The group association IE may additionally/alternatively include a multi-bit group UE ID to identify the group the UE requests to join/unjoin.

The base station 508 may generate and transmit an initial UE message (or some other NG-AP signal) based on the UL information transfer RRC message to the AMF 512. The base station 508 may transmit the initial UE message to the AMF 512 to check whether the UE 504 is authorized to join/unjoin the group. The initial UE message may include the group association IE included in the UL information transfer RRC message.

The AMF 512 may determine whether the UE 504 is authorized to join/unjoin the group as discussed above with respect to FIG. 2/3.

If the AMF 512 determines that the UE 504 is not authorized to join/unjoin the group, the AMF 512 may send a reject message (not shown) with an indication that the request to join the group was denied.

If the AMF 512 determines that the UE 504 is authorized to join/unjoin the group, the AMF 512 may send a UE context modification request message 524. Similar to that discussed above with respect to FIG. 3, the context modification request message 524 may include a group association authorized IE that provides indications that the UE 504 is authorized to join/unjoin a group in accordance with either of two options. In a first option, the group association authorized IE may include a group UE ID (for example, 8, 16, or 32 bits) that allows the base station 508 to identify the UEs belonging to the same group. In a second option, the group association authorized IE may include a list of UE identifiers that allows the base station 508 to identify the UEs belonging to the same group.

At 528, the base station 508 may transmit a downlink (DL) information transfer RRC message to the UE 504 to indicate that the UE 504 is authorized to join/unjoin the group. The DL information transfer RRC message may include a group association response IE that includes a one-bit join response indication that indicates whether the join/unjoin request in the UL information transfer RRC message was successful.

Knowledge of which UEs are associated with one another in a group may allow a network (for example, RAN 108) to efficiently manage network operations. For example, the base station may reduce measurement overhead by configuring measurements to one UE (or a subset of UEs) of a group. This may be based on the assumption that the UEs of a group are proximate to one another in a common location. Thus, measurements from a representative UE may be assumed to be applicable to the other UEs of the group. Communication parameters (for example, modulation and coding schemes (MCSs), beamforming coefficients, etc.) applicable to one UE of a group can be applied to all UEs of the group.

In some embodiments, a base station may manage group mobility based on grouping information. For example, the base station may handover all UEs of a group together. Alternatively, one UE of a group may be handed over ahead of other UEs of the group to ensure uninterrupted service during handover. The remaining UEs may be handed over after confirming the successful handover of the first UE of a group.

In some embodiments, a base station may keep one UE of the group connected to a macrocell, and connect the other UEs of the group to booster cells that may be handed over more frequently.

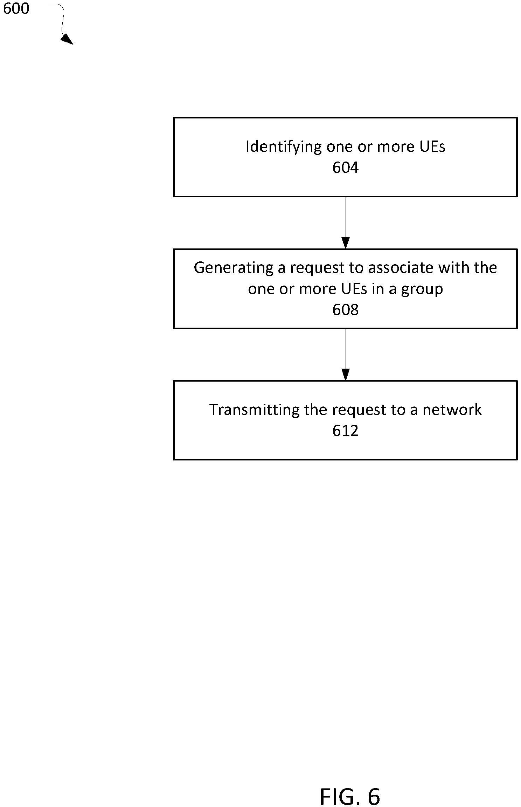

FIG. 6 provides an operation flow/algorithmic structure 600 in accordance with some embodiments. The operation flow/algorithmic structure 600 may be performed/implemented by a UE such as, for example, one of the UEs of group 104, UE 204, UE 304, UE 404, UE 504, or UE 900 or by components thereof, for example, processors 904.

The operation flow/algorithmic structure 600 may include, at 604, identifying one or more UEs. The UEs identified at 604 may be those with which the executing UE wishes to associate in a group, for grouped communications with a network. In some embodiments, a UE may identify the UEs based on group configuration information stored at the UE. Additionally/alternatively, the UE may identify the UEs based on a discovery process.

The operation flow/algorithmic structure 600 may further include, at 608, generating a request to associate with the one or more UEs in a group. The request may be a NAS registration request, an UL NAS transport message, a NAS association request, an RRC connection request, or an UL information transfer RRC message. The request may include a group association IE with a one-bit join/unjoin indication or a group UE ID. The request may be generated to include an identifier of the executing UE. In some embodiments, the request may include identifiers corresponding to the UEs of the group with which the UE wishes to join.

The operation flow/algorithmic structure 600 may further include, at 612, transmitting the request to a network. If the request is a NAS message, the request may be sent to an AMF. If the request is an RRC message, the request may be sent to a base station.

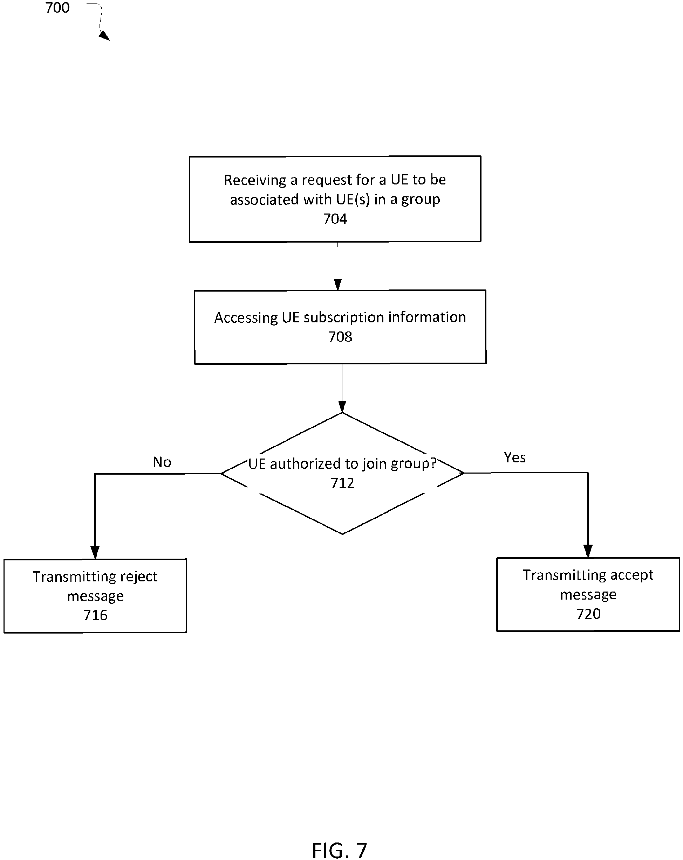

FIG. 7 provides an operation flow/algorithmic structure 700 in accordance with some embodiments. The operation flow/algorithmic structure 700 may be performed/implemented by an AMF such as, for example, AMF 116, AMF 212, AMF 312, AMF 412, AMF 512, or network device 1000 or by components thereof, for example, processors 1004.

The operation flow/algorithmic structure 700 may include, at 704, receiving a request for a UE to be associated with one or more other UEs in a group. In some embodiments, the request may be received from the UE itself, or from a base station that has received a request from the UE. The request may be a NAS registration request, an UL NAS transport message, a NAS association request, or an initial UE message. The request may include a group association IE with a one-bit join/unjoin indication or a group UE ID.

The operation flow/algorithmic structure 700 may further include, at 708, accessing UE subscription information. The UE subscription information may be stored in a subscription repository in the core network that is accessible to the AMF.

The operation flow/algorithmic structure 700 may further include determining whether the UE is authorized to join the group at 712. This may be done by referencing information in the UE subscription information.

If it is determined, at 712, that the UE is not authorized to join the group, the operation flow/algorithmic structure may advance to transmitting a reject message at 716.

If it is determined, at 712, that the UE is authorized to join the group, the operation flow/algorithmic structure may advance to transmitting an accept message at 720.

If the request is a NAS registration request, the accept message may be a registration accept message, having a group association response IE, transmitted to the UE. The AMF may also send an initial context setup request that includes a group association authorized IE to a base station that provides service to the UE.

If the request is a NAS request (for example UL NAS transport message or a NAS association request), the accept message may be a NAS response message (for example, a DL NAS transport message or a NAS association response), having a group association response IE, transmitted to the UE. The AMF may also send a UE context modification request that includes a group association authorized IE to a base station that provides service to the UE.

If the request is an initial UE message from a base station, the accept message may be a context setup/modification request that includes a group association authorized IE transmitted to the base station.

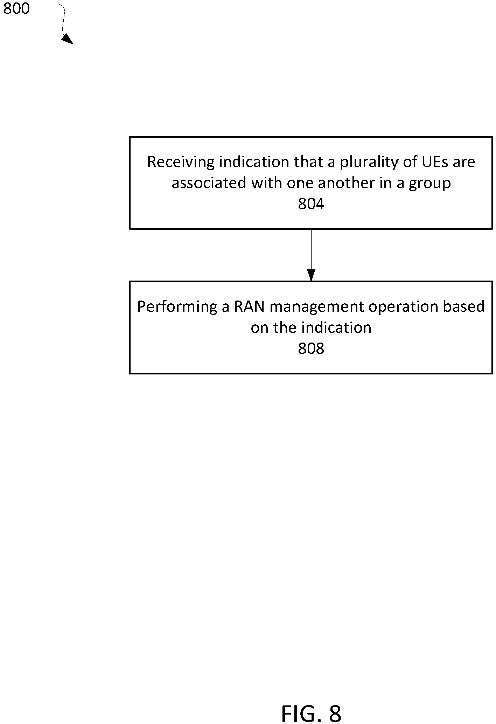

FIG. 8 provides an operation flow/algorithmic structure 800 in accordance with some embodiments. The operation flow/algorithmic structure 800 may be performed/implemented by a base station such as, for example, a base station of the RAN 108, base station 208, base station 308, base station 408, base station 508, or network device 1000 or by components thereof, for example, processors 1004.

The operation flow/algorithmic structure 800 may include, at 804, receiving an indication that a plurality of UEs are associated with one another in a group. The indication may be from a group association authorized IE received in a UE context setup/modification request or an accept message received from an AMF. The group association authorized IE may indicate that a UE is authorized to join a group and a group UE ID or list of UE IDs.

The operation flow/algorithmic structure 600 may further include, at 608, performing a RAN management operation based on the indication. The RAN management operation may be a mobility operation or a measurement operation.

In some embodiments, the RAN management operation may include selecting a representative UE from the plurality of UEs of a group and configuring the representative UE with measurements to perform on behalf of the plurality of UEs of the group. The base station may receive, from the representative UE, measurements based on the measurement configurations. The base station may then determine configuration parameters for the plurality of UEs of the group based on the measurements. The base station may then transmit the configuration parameters to the plurality of UEs.

In some embodiments, the RAN management operation may include collectively handing over the plurality of UEs to a target base station. For example, all the UEs of the group may be handed over to the target base station at one time. The decision to handover the plurality of UEs may be based on feedback from one or more representative UEs.

In other embodiments, the RAN management operation may include handing over the plurality of UEs to one or more target base stations and a plurality of stages. For example, a first UE of the group may be handed over in a first stage. Upon determining that the first UE was successfully handed over, the base station may handover one or more additional UEs in a second stage.

In some embodiments, the RAN management operation may include connecting a first UE of the group to a special cell (for example, a PCell or a PSCell) and connecting one or more of the remaining UEs of the group to a secondary cell (for example, an SCell).

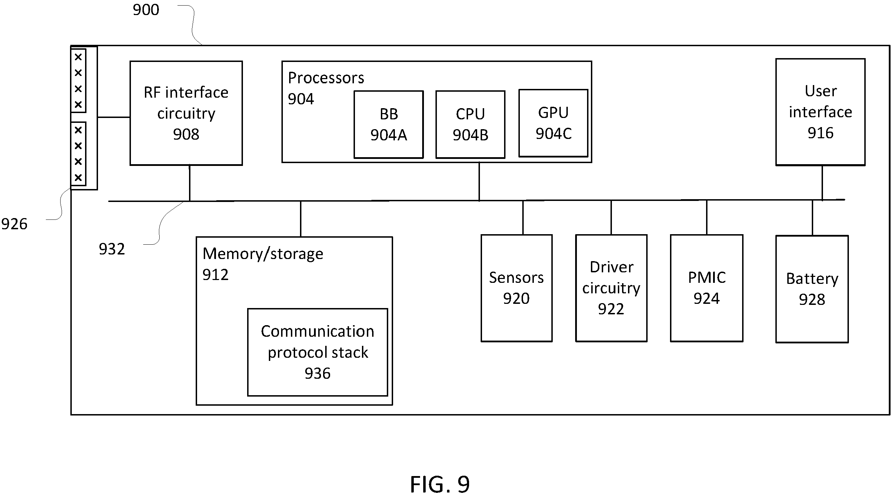

FIG. 9 illustrates a UE 900 in accordance with some embodiments. The UE 900 may be similar to and substantially interchangeable with one of the UEs group 104, UE 204, UE 304, UE 404, or UE 504.

The UE 900 may be any mobile or non-mobile computing device, such as, for example, mobile phones, computers, tablets, industrial wireless sensors (for example, microphones, carbon dioxide sensors, pressure sensors, humidity sensors, thermometers, motion sensors, accelerometers, laser scanners, fluid level sensors, inventory sensors, electric voltage/current meters, or actuators), video surveillance/monitoring devices (for example, cameras or video cameras), wearable devices (for example, a smart watch), or Internet-of-things devices.

The UE 900 may include processors 904, RF interface circuitry 908, memory/storage 912, user interface 916, sensors 920, driver circuitry 922, power management integrated circuit (PMIC) 924, antenna structure 926, and battery 928. The components of the UE 900 may be implemented as integrated circuits (ICs), portions thereof, discrete electronic devices, or other modules, logic, hardware, software, firmware, or a combination thereof. The block diagram of FIG. 9 is intended to show a high-level view of some of the components of the UE 900. However, some of the components shown may be omitted, additional components may be present, and different arrangement of the components shown may occur in other implementations.

The components of the UE 900 may be coupled with various other components over one or more interconnects 932, which may represent any type of interface, input/output, bus (local, system, or expansion), transmission line, trace, or optical connection that allows various circuit components (on common or different chips or chipsets) to interact with one another.

The processors 904 may include processor circuitry such as, for example, baseband processor circuitry (BB) 904A, central processor unit circuitry (CPU) 904B, and graphics processor unit circuitry (GPU) 904C. The processors 904 may include any type of circuitry or processor circuitry that executes or otherwise operates computer-executable instructions, such as program code, software modules, or functional processes from memory/storage 912 to cause the UE 900 to perform operations as described herein.

In some embodiments, the baseband processor circuitry 904A may access a communication protocol stack 936 in the memory/storage 912 to communicate over a 3GPP compatible network. In general, the baseband processor circuitry 904A may access the communication protocol stack 936 to: perform user plane functions at a PHY layer, MAC layer, RLC layer, PDCP layer, SDAP layer, and PDU layer; and perform control plane functions at a PHY layer, MAC layer, RLC layer, PDCP layer, RRC layer, and a NAS layer. In some embodiments, the PHY layer operations may additionally/alternatively be performed by the components of the RF interface circuitry 908.

The baseband processor circuitry 904A may generate or process baseband signals or waveforms that carry information in 3GPP-compatible networks. In some embodiments, the waveforms for NR may be based cyclic prefix OFDM (CP-OFDM) in the uplink or downlink, and discrete Fourier transform spread OFDM (DFT-S-OFDM) in the uplink.

The memory/storage 912 may include one or more non-transitory, computer-readable media that includes instructions (for example, communication protocol stack 936) that may be executed by one or more of the processors 904 to cause the UE 900 to perform various operations described herein. The memory/storage 912 include any type of volatile or non-volatile memory that may be distributed throughout the UE 900. In some embodiments, some of the memory/storage 912 may be located on the processors 904 themselves (for example, L1 and L2 cache), while other memory/storage 912 is external to the processors 904 but accessible thereto via a memory interface. The memory/storage 912 may include any suitable volatile or non-volatile memory such as, but not limited to, dynamic random access memory (DRAM), static random access memory (SRAM), erasable programmable read only memory (EPROM), electrically erasable programmable read only memory (EEPROM), Flash memory, solid-state memory, or any other type of memory device technology.

The RF interface circuitry 908 may include transceiver circuitry and radio frequency front module (RFEM) that allows the UE 900 to communicate with other devices over a radio access network. The RF interface circuitry 908 may include various elements arranged in transmit or receive paths. These elements may include, for example, switches, mixers, amplifiers, filters, synthesizer circuitry, and control circuitry.

In the receive path, the RFEM may receive a radiated signal from an air interface via antenna structure 926 and proceed to filter and amplify (with a low-noise amplifier) the signal. The signal may be provided to a receiver of the transceiver that down-converts the RF signal into a baseband signal that is provided to the baseband processor of the processors 904.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna 926.

In various embodiments, the RF interface circuitry 908 may be configured to transmit/receive signals in a manner compatible with NR access technologies.

The antenna 926 may include antenna elements to convert electrical signals into radio waves to travel through the air and to convert received radio waves into electrical signals. The antenna elements may be arranged into one or more antenna panels. The antenna 926 may have antenna panels that are omnidirectional, directional, or a combination thereof to enable beamforming and multiple input, multiple output communications. The antenna 926 may include microstrip antennas, printed antennas fabricated on the surface of one or more printed circuit boards, patch antennas, or phased array antennas. The antenna 926 may have one or more panels designed for specific frequency bands including bands in FR1 or FR2.

The user interface circuitry 916 includes various input/output (I/O) devices designed to enable user interaction with the UE 900. The user interface 916 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators such as light emitting diodes (LEDs) and multi-character visual outputs, or more complex outputs such as display devices or touchscreens (for example, liquid crystal displays (LCDs), LED displays, quantum dot displays, and projectors), with the output of characters, graphics, multimedia objects, and the like being generated or produced from the operation of the UE 900.

The sensors 920 may include devices, modules, or subsystems whose purpose is to detect events or changes in its environment and send the information (sensor data) about the detected events to some other device, module, or subsystem. Examples of such sensors include inertia measurement units comprising accelerometers, gyroscopes, or magnetometers; microelectromechanical systems or nanoelectromechanical systems comprising 3-axis accelerometers, 3-axis gyroscopes, or magnetometers; level sensors; flow sensors; temperature sensors (for example, thermistors); pressure sensors; barometric pressure sensors; gravimeters; altimeters; image capture devices (for example, cameras or lensless apertures); light detection and ranging sensors; proximity sensors (for example, infrared radiation detector and the like); depth sensors; ambient light sensors; ultrasonic transceivers; and microphones or other like audio capture devices.

The driver circuitry 922 may include software and hardware elements that operate to control particular devices that are embedded in the UE 900, attached to the UE 900, or otherwise communicatively coupled with the UE 900. The driver circuitry 922 may include individual drivers allowing other components to interact with or control various input/output (I/O) devices that may be present within, or connected to, the UE 900. For example, driver circuitry 922 may include a display driver to control and allow access to a display device, a touchscreen driver to control and allow access to a touchscreen interface, sensor drivers to obtain sensor readings of sensor circuitry 920 and control and allow access to sensor circuitry 920, drivers to obtain actuator positions of electro-mechanic components or control and allow access to the electro-mechanic components, a camera driver to control and allow access to an embedded image capture device, audio drivers to control and allow access to one or more audio devices.

The PMIC 924 may manage power provided to various components of the UE 900. In particular, with respect to the processors 904, the PMIC 924 may control power-source selection, voltage scaling, battery charging, or DC-to-DC conversion.

A battery 928 may power the UE 900, although in some examples the UE 900 may be mounted deployed in a fixed location, and may have a power supply coupled to an electrical grid. The battery 928 may be a lithium ion battery, a metal-air battery, such as a zinc-air battery, an aluminum-air battery, a lithium-air battery, and the like. In some implementations, such as in vehicle-based applications, the battery 928 may be a typical lead-acid automotive battery.

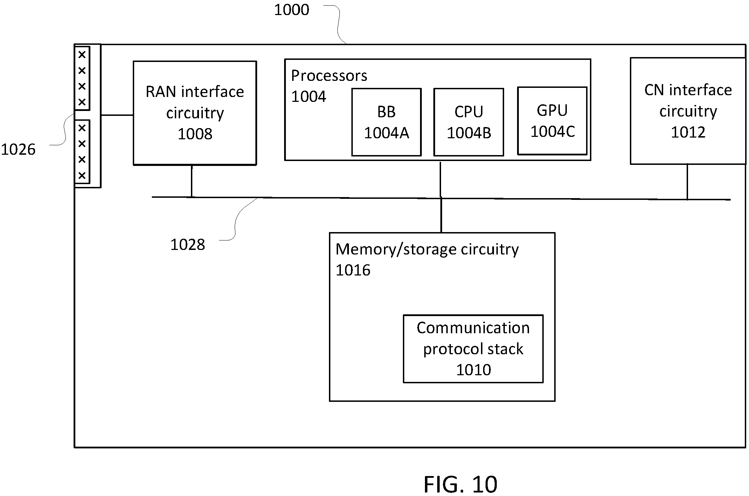

FIG. 10 illustrates a network device 1000 in accordance with some embodiments. The network device 1000 may be similar to and substantially interchangeable with base station of the RAN 108, AMF 116, base station 308, AMF 312, base station 408, AMF 412, base station 508, AMF 512, base station 608, or AMF 612.

The network device 1000 may include processors 1004, RF interface circuitry 1008 (if implemented as a base station), core network (CN) interface circuitry 1012, memory/storage circuitry 1016, and antenna structure 1026 (if implemented as a base station).

The components of the network device 1000 may be coupled with various other components over one or more interconnects 1028.

The processors 1004, RF interface circuitry 1008, memory/storage circuitry 1016 (including communication protocol stack 1010), antenna structure 1026, and interconnects 1028 may be similar to like-named elements shown and described with respect to FIG. 9. If the device 1000 is implemented as a base station, the communication protocol stack 1010 may include access stratum layers. If the network device 1000 is implemented as a device in the core network 112, the communication protocol stack 1010 may include a NAS layer.

The CN interface circuitry 1012 may provide connectivity to a core network, for example, a 5^{th} Generation Core network (5GC) using a 5GC-compatible network interface protocol such as carrier Ethernet protocols, or some other suitable protocol. Network connectivity may be provided to/from the base station 1000 via a fiber optic or wireless backhaul. The CN interface circuitry 1012 may include one or more dedicated processors or FPGAs to communicate using one or more of the aforementioned protocols. In some implementations, the CN interface circuitry 1012 may include multiple controllers to provide connectivity to other networks using the same or different protocols.

In some embodiments, the base station 1000 may be coupled with transmit receive points (TRPs) using the antenna structure 1026, CN interface circuitry, or other interface circuitry.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

For one or more embodiments, at least one of the components set forth in one or more of the preceding figures may be configured to perform one or more operations, techniques, processes, or methods as set forth in the example section below. For example, the baseband circuitry as described above in connection with one or more of the preceding figures may be configured to operate in accordance with one or more of the examples set forth below. For another example, circuitry associated with a UE, base station, or network element as described above in connection with one or more of the preceding figures may be configured to operate in accordance with one or more of the examples set forth below in the example section.

### Examples

In the following sections, further exemplary embodiments are provided.

Example 1 includes a method of operating a user equipment (UE), the method comprising: identifying one or more UEs; generating a request to associate with the one or more UEs in a group; and transmitting the request to a network.

Example 2 includes the method of example 1 or some other example herein, wherein the request comprises: a group association information element (IE) that includes: a one-bit indication that the UE requests to join the group; or a multi-bit group UE identifier that corresponds to the group.

Example 3 includes the method of example 1 or some other example herein, further comprising: generating the request as a non-access stratum (NAS) message; and transmitting the NAS message to an access and mobility management function (AMF).

Example 4 includes the method of example 3 or some other example herein, wherein the NAS message is a NAS registration request.

Example 5 includes the method of example 3 or some other example herein, wherein the NAS message is an uplink (UL) NAS transport message or a NAS association request message.

Example 6 includes the method of example 1 or some other example herein, further comprising: generating the request as a radio resource control (RRC) message; and transmitting the RRC message to a base station.

Example 7 includes the method of example 6 or some other example herein, wherein the RRC message is an RRC setup request or an uplink information transfer RRC message.

Example 8 includes the method of example 1 or some other example herein, further comprising: obtaining a group identifier of the group; and generating the request to include the group identifier.

Example 9 includes the method of example 8 or some other example herein, further comprising: obtaining the group identifier from a subscriber identity module of the UE.

Example 10 includes the method of example 1 or some other example herein, further comprising: receiving a response message from a network, the response message to include a group association response information element (IE) with a one-bit indicator to indicate whether the request to associate with the one or more UEs in the group is granted.

Example 11 includes the method of example 10 or some other example herein, wherein the response message is a non-access stratum (NAS) registration accept message, a downlink NAS transport message, a NAS association response message, a radio resource control (RRC) setup message, or downlink information transfer RRC message.

Example 12 includes a method of operating an access and mobility management function (AMF), the method comprising: receiving a request for a user equipment (UE) to be associated with one or more UEs in a group; accessing UE subscription information to determine the UE is authorized to join the group; and transmitting an accept message to indicate that the UE is authorized to join the group.

Example 13 includes the method of example 12 or some other example herein, further comprising: transmitting a message to a base station to indicate that the UE is authorized to join the group, wherein the message includes a group association authorized information element (IE) with: a group UE identifier that corresponds to the group; or a list of one or more UE identifiers that respectively correspond to the one or more UEs in the group.

Example 14 includes the method of example 12 or some other example herein, wherein the message is an initial context setup request message; or a UE context modification request.

Example 15 includes the method of example 12 or some other example herein, wherein the request is an uplink non-access stratum (NAS) transport message or a NAS association request message.

Example 16 includes the method of example 12 or some other example herein, wherein the request includes a group ID and the method further comprises: identifying the one or more UEs based on the group ID and the UE subscription information.

Example 17 includes the method of example 12 or some other example herein, wherein the UE subscription information includes membership information of the group and the registration request does not specifically identify the group.

Example 18 includes the method of example 12 or some other example herein, wherein the request includes identities of the one or more UEs.

Example 19 includes the method of example 12 or some other example herein, wherein the request is a non-access stratum registration request from the UE or is an initial UE message from a base station.

Example 20 includes a method of operating a base station, the method comprising: receiving an indication that a plurality of user equipments (UEs) are associated with one another in a group; and performing a radio access network (RAN) management operation based on the indication.

Example 21 includes the method of claim 20 or some other example herein, further comprising: receiving the indication in a message that includes a group association authorized information element (IE) with: a group UE identifier that corresponds to the group; or a list of one or more UE identifiers that respectively correspond to the one or more UEs in the group.

Example 22 includes the method of example 21 or some other example herein, wherein the message is an initial context setup request message; or a UE context modification request.

Example 23 includes the method of example 20 or some other example herein, further comprising: receiving, from a UE, a group association information element (IE) in a first message; and transmitting, to an access and mobility management function (AMF), the group association IE in a second message, wherein the first message is a radio resource control (RRC) setup request or an uplink information transfer RRC message, and the second message is an initial UE message.

Example 24 includes the method of example 20 or some other example herein, wherein the RAN management operation is a mobility operation or a measurement operation.

Example 25 includes a method of example 20 or some other example herein, wherein performing the RAN management operation comprises: selecting a representative UE from the plurality of UEs; and configuring the representative UE with measurements to perform on behalf of the plurality of UEs.

Example 26 includes a method of example 20 or some other example herein, wherein performing the RAN management operation comprises: collectively handing over the plurality of UEs to a target base station.

Example 27 includes the method of example 20 or some other example herein, wherein performing the RAN management operation comprises: handing over the plurality of UEs to one or more target base stations in a plurality of stages.

Example 28 includes the method of example 27 or some other example herein, wherein handing over the plurality of UEs in a plurality of stages comprises: handing over a first UE of the plurality of UEs to a first target base station in a first stage; confirming the first UE is successfully handed over to the first target base station; and handing over one or more second UEs of the plurality of UEs to the first target base station or a second target base station in a second stage based on said confirming the first UE is successfully handed over.

Example 29 includes the method of example 20 or some other example herein, wherein performing the RAN management operation comprises: connecting a first UE of the plurality of UEs to a special cell; and connecting one or more second UEs of the plurality of UEs to at least one secondary cell. Example 30 may include an apparatus comprising means to perform one or more elements of a method described in or related to any of examples 1-29, or any other method or process described herein.

Example 31 may include one or more computer-readable media comprising instructions to cause an electronic device such as a user equipment (UE), upon execution of the instructions by one or more processors, to perform one or more elements of a method described in or related to any of examples 1-29, or any other method or process described herein.

Example 32 may include an apparatus comprising logic, modules, or circuitry to perform one or more elements of a method described in or related to any of examples 1-29, or any other method or process described herein.

Example 33 may include a method, technique, or process as described in or related to any of examples 1-29, or portions or parts thereof.

Example 34 may include an apparatus comprising: one or more processors and one or more computer-readable media comprising instructions that, when executed by the one or more processors, cause the one or more processors to perform the method, techniques, or process as described in or related to any of examples 1-29, or portions thereof.

Example 35 may include a signal as described in or related to any of examples 1-29, or portions or parts thereof.

Example 36 may include a datagram, information element, packet, frame, segment, PDU, or message as described in or related to any of examples 1-29, or portions or parts thereof, or otherwise described in the present disclosure.

Example 37 may include a signal encoded with data as described in or related to any of examples 1-29, or portions or parts thereof, or otherwise described in the present disclosure.

Example 38 may include a signal encoded with a datagram, IE, packet, frame, segment, PDU, or message as described in or related to any of examples 1-29, or portions or parts thereof, or otherwise described in the present disclosure.

Example 39 may include an electromagnetic signal carrying computer-readable instructions, wherein execution of the computer-readable instructions by one or more processors is to cause the one or more processors to perform the method, techniques, or process as described in or related to any of examples 1-29, or portions thereof.

Example 40 may include a computer program comprising instructions, wherein execution of the program by a processing element is to cause the processing element to carry out the method, techniques, or process as described in or related to any of examples 1-29, or portions thereof.

Example 41 may include a signal in a wireless network as shown and described herein.

Example 42 may include a method of communicating in a wireless network as shown and described herein.

Example 43 may include a system for providing wireless communication as shown and described herein.

Example 44 may include a device for providing wireless communication as shown and described herein.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method of operating a user equipment (UE), the method comprising:
identifying, after registration with an access and mobility management function (AMF), one or more UEs;
generating a non-access stratum (NAS) message to include a request to associate with the one or more UEs in a group; and
transmitting the NAS message to the AMF

2. The method of claim 1, wherein the NAS message comprises:
a group association information element (IE) that includes: a one-bit indication that the UE requests to join the group; or a multi-bit group UE identifier that corresponds to the group.

3. The method of claim 1 or 2, wherein the NAS message is an uplink (UL) NAS transport message or a NAS association request message.

4. The method of any preceding claim, further comprising:
obtaining a group identifier of the group from a subscriber identity module of the UE; and
generating the NAS message to include the group identifier.

5. The method of any preceding claim, further comprising:
receiving a response message from a network, the response message to include a group association response information element (IE) with a one-bit indicator to indicate whether the request to associate with the one or more UEs in the group is granted,
wherein: the NAS message is an uplink NAS transport message and the response message is a downlink NAS transport message; or the NAS message is a NAS association request message and the response message is a NAS association response message.

6. A method of operating an access and mobility management function (AMF), the method comprising:
completing a registration of a user equipment (UE);
receiving, after completing the registration, a request for the UE to be associated with one or more UEs in a group;
accessing UE subscription information to determine the UE is authorized to join the group; and
transmitting an accept message to indicate that the UE is authorized to join the group.

7. The method of claim 6, further comprising:
transmitting a UE context modification request to a base station to indicate that the UE is authorized to join the group, wherein the UE context modification request includes a group association authorized information element (IE) with: a group UE identifier that corresponds to the group; or a list of one or more UE identifiers that respectively correspond to the one or more UEs in the group.

8. The method of claim 6 or 7, wherein: the request is an uplink non-access stratum (NAS) transport message and the accept message is a downlink NAS transport message; or the request is a NAS association request message and the accept message is a NAS association response message.

9. The method of any of claims 6-8, wherein the request includes a group ID and the method further comprises:
identifying the one or more UEs based on the group ID and the UE subscription information.

10. The method of any of claims 6-9, wherein the UE subscription information includes membership information of the group and the request does not specifically identify the group.

11. The method of any of claims 6-10, wherein the request includes identities of the one or more UEs.

12. A base station having circuitry to:
receive, from a user equipment (UE), an uplink information transfer radio resource control (RRC) message that includes a request to join or unjoin a group of one or more UEs;
transmit, to an access and mobility management function (AMF), a first message to determine whether the UE is authorized to join or unjoin the group;
receive, from the AMF, a second message that is indicate whether the UE is authorized to join or unjoin the group; and
transmit, to the UE, a downlink information transfer RRC message to indicate whether the UE is authorized to join or unjoin the group.

13. The base station of claim 12, wherein the uplink information transfer RRC message includes a group association information element (IE) with: a group UE identifier that corresponds to the group; or a list of one or more UE identifiers that respectively correspond to the one or more UEs in the group.

14. The base station of claim 12 or 13, wherein the second message is a UE context modification request.

15. The base station of any of claims 12-14, wherein the downlink information transfer RRC message is to indicate the UE is authorized to join the group and the processing circuitry is further to perform a mobility operation or a measurement operation based on the group.
